# EUROPÄISCHE PATENTSCHRIFT

(11) **EP 1 699 651 B1**
(45) Veröffentlichungstag und Bekanntmachung des Hinweises auf die Patenterteilung: **22.07.2009**
(21) Anmeldenummer: 04818388.3
(22) Anmeldetag: 10.11.2004
(51) Int. Cl.: B60H 1/34

(54) **DÜSENANORDNUNG, INSBESONDERE FÜR EIN KRAFTFAHRZEUG**
NOZZLE ARRAY, ESPECIALLY FOR A MOTOR VEHICLE
ENSEMBLE BUSE, NOTAMMENT POUR UN VEHICULE AUTOMOBILE

(30) Priorität: 13.11.2003 DE 10353182
(43) Veröffentlichungstag der Anmeldung: 13.09.2006
(73) Patentinhaber: Behr GmbH & Co. KG, 70469 Stuttgart (DE)
(72) Erfinder: KLINGLER, Dietrich, 73540 Heubach (DE); VOIGT, Klaus, 74321 Bietigheim-Bissingen (DE)
(86) Internationale Anmeldenummer: PCT/EP2004/012717
(87) Internationale Veröffentlichungsnummer: WO 2005/047033

(56) Entgegenhaltungen:
- EP-A- 1 223 061
- EP-A- 1 359 035
- DE-A1- 10 244 280
- DE-C1- 3 927 217
- US-A- 4 583 448

## Beschreibung

Die Erfindung betrifft eine Düsenanordnung, insbesondere für ein Kraftfahrzeug, gemäß dem Oberbegriff des Anspruchs 1.

Aus der EP 1 223 061 A2 ist ein Luftausströmer, insbesondere zur Fahrzeugklimatisierung, mit einem Rahmen, mehreren Lamellen, die um eine erste. Achse verschwenkbar angeordnet sind, und mindestens einem Koppelelement, mit dem jede der Lamellen gekoppelt ist, wobei das Koppelelement relativ zur ersten Achse zwischen einer Neutrastellung, in der die Lamellen zueinander parallel sind, und einer Komfortstellung verstellbar sind, in der mindestens ein Teil der Lamellen in zueinander entgegengesetzter Richtung verschwenkbar ist. Der Luftausströmer ist vor einem Luftkanal angeordnet, aus dem ein Luftstrom austritt, dessen Richtung mit Hilfe des Luftausströmers eingestellt werden kann. Dabei kann der Luftstrom mit Hilfe der zueinander entgegengesetzt verschwenkten Lamellen aufgefächert werden, so dass ein divergierender Luftstrom erzeugt wird, in welchem geringere Strömungsgeschwindigkeiten herrschen als bei einem Luftstrom mit konstantem Querschnitt, so dass auch bei einem hohen Luftdurchsatz verhindert werden kann, dass der austretende Luftstrom mit hohen Geschwindigkeiten auf einen Fahrzeuginsassen auftrifft. Ein derartiger Luftausströmer lässt jedoch insbesondere in Einblick auf die Optik noch Wünsche offen.

Aus der EP 1 359 035 A2 ist eine Luftauslassdüse bekannt, die einen Verdrängungskörper aufweist, welcher als Gitter ausgebildet sein kann und der so am Austritt der Düse angeordnet ist, dass ein Luftaustritt neben der axialen Richtung auch in radialer Richtung der Düse erfolgen kann.

Es ist Aufgabe der Erfindung, eine verbesserte Düsenanordnung zur Verfügung zu stellen.

Diese Aufgabe wird gelöst durch eine Düsenanordnung mit den Merkmalen des Anspruchs 1. Vorteilhafte Ausgestaltungen sind Gegenstand der Unteransprüche.

Erfindungsgemäß ist eine Düsenanordnung, insbesondere für ein Belüftungssystem eines Kraftfahrzeugs, vorgesehen, mit mindestens einer an einem Ende eines Strömungskanals angeordneten Düse und einem am Düsenaustritt angeordneten Gitter, wobei das Gitter den Düsenaustritt teilweise, vorzugsweise im zentralen Bereich, verdeckt, so dass ein Spalt, insbesondere ein um das Gitter herum umlaufender Spalt unverdeckt bleibt. Dieser Spalt dient insbesondere bei einer rein diffusen Luftströmung dem Luftaustritt, wodurch die Verteilung der Luft unterstützt wird, während ein gerichteter Luftstrahl das Gitter problemlos durchdringen kann. Das Gitter dient insbesondere dem Sichtschutz, so dass die Düsen im Inneren für einen Insassen unter normalen Umständen nicht oder nur kaum merklich sichtbar ist.

Bevorzugt ist das Gitter rechteckförmig ausgebildet. Im Falle einer einzelnen Düse kann das Gitter dabei im Wesentlichen quadratisch ausgebildet sein, sind zwei Düsen nebeneinander angeordnet, so verdeckt das Gitter den zentralen Bereich beider Düsen. Beim Gitter handelt es sich vorzugsweise um ein netzartiges Gitter, das insbesondere dunkel, vorzugsweise schwarz, ist.

Im Folgenden wird die Erfindung anhand eines Ausführungsbeispiels unter Bezugnahme auf die Zeichnung im Einzelnen erläutert. In der Zeichnung zeigen:
Fig. 1 eine perspektivische Ansicht einer Düsenanordnung gemäß dem Ausführungsbeispiel, wobei durch Pfeile eine gerichtete Luftströmung angedeutet ist,
Fig. 2 einen Schnitt durch die Düsenanordnung von Fig. 1, wobei durch Pfeile eine gerichtete Luftströmung angedeutet ist,
Fig. 3 eine perspektivische Ansicht der Düsenanordnung von Fig. 1, wobei durch Pfeile eine gemischte Luftströmung angedeutet ist,
Fig. 4 einen Schnitt durch die Düsenanordnung von Fig. 1, wobei durch Pfeile eine gemischte Luftströmung angedeutet ist,
Fig. 5 eine perspektivische Ansicht der Düsenanordnung von Fig. 1, wobei durch Pfeile eine diffuse Luftströmung angedeutet ist, und
Fig. 6 einen Schnitt durch die Düsenanordnung von Fig. 1, wobei durch Pfeile eine diffuse Luftströmung angedeutet ist.

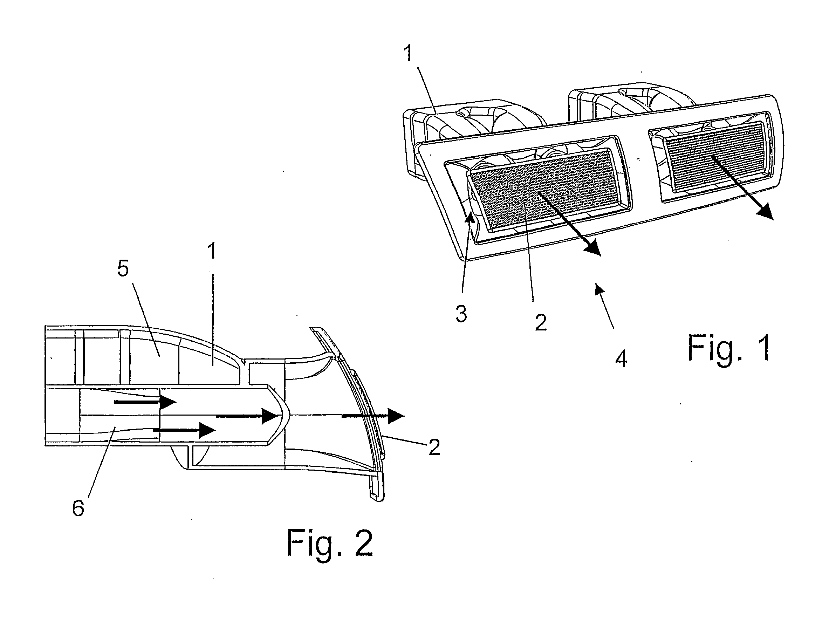

Die Figuren zeigen eine einstellbare Düse 1, vorliegend eine Dralldüse, welche in einem Luftausströmer eines Belüftungssystems von einem Kraftfahrzeug verwendet wird. Hierbei ist am Ende zweier benachbart angeordneter, einander zugeordneter Düsen 1, im Folgenden auch als Düsenaustritt bezeichnet, ein in eine Blende integriertes Gitter 2 angeordnet, welches die Düsen 1 zum Einen schützt und zum Anderen das Design ansprechender macht. Hierbei ist das Gitter 2 derart ausgebildet, dass es den zentralen Bereich des Düsenaustritts verdeckt, wozu es im Wesentlichen undurchsichtig, aber luftdurchlässig ausgebildet ist, jedoch einen umlaufenden Spalt 3 aufweist. Dabei bilden die einstellbaren Düsen 1 und das Gitter 2 einschließlich des Spalts 3 eine erfindungsgemäße Düsenanordnung 4. In Figuren 1, 3 und 5 sind jeweils zwei Düsenanordnungen 4 nebeneinander dargestellt, wie sie beispielsweise in der Mitte des Armaturenbrettes eines Kraftfahrzeugs verwendet werden.

Jeder Düse 1 wird über einen Strömungskanal temperierte Luft von einer Klimaanlage (nicht dargestellt) zugeführt. Dieser Strömungskanal wird im Einlassbereich jeder Düse 1 in zwei Teil-Strömungskanäle, nämlich einem äußeren Teil-Strömungskanal 5 und einem inneren Teil-Strömungskanal 6 aufgeteilt. Dabei wird dem äußeren Teil-Strömungskanal 5 ein Drall durch entsprechende Umlenkung im Strömungsverlauf gegeben, so dass durch diesen äußeren Teil-Strömungskanal 5 dem Fahrzeuginnenraum Luft mit einem diffusen Strömungsverlauf zugeführt wird. Der innere Teil-Strömungskanal 6 ist dagegen möglichst gerade ausgebildet, so dass durch diesen Teil-Strömungskanal 6 dem Fahrzeuginnenraum Luft mit einer relativ gleichmäßigen, verwirbelungsfreien Strömung zugeführt wird.

Der äußere Teil-Strömungskanal 5 dient insbesondere der Zuführung von Luft bei einer Komfortstellung (diffuse Strömung) der Düsenanordnung 1 und ist starr ausgebildet, während der innere Teil-Strömungskanal 6 der Zuführung der Luft in einer Spot-Stellung (gerichtete Strömung) der Düsenanordnung 1 dient. Beliebige Mischstellungen sind möglich. Die Aufteilung des über den Strömungskanal zugeführten Luftstromes auf die beiden Teil-Strömungskanäle 5 und 6 erfolgt mittels einer nicht näher dargestellten Dosiervorrichtung.

Befinden sich die Düsen 1 in einer Spot-Stellung (Figuren 1 und 2), d.h. ein gerichteter Luftstrahl wird gewünscht, so gelangt ausschließlich Luft durch den inneren Teil-Strömungskanal 6, die drallfrei direkt auf den zentralen Bereich des Gitters 2 trifft und dieses im Wesentlichen unabgelenkt durchströmt. Dabei kann die Richtung des Luftstrahls eingestellt werden.

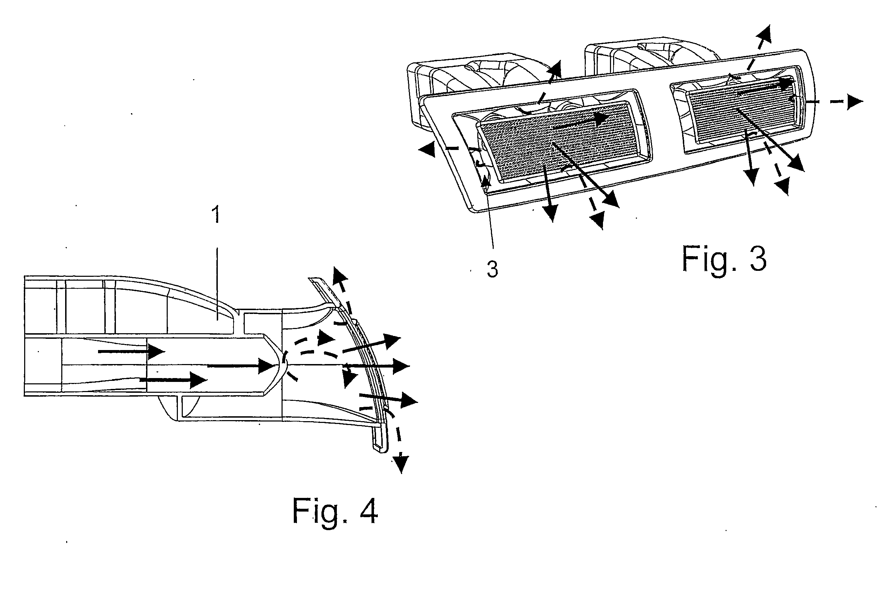

Wird eine gemischte Luftströmung, d.h. eine teilweise gerichtete und teilweise diffuse Luftströmung, gewünscht, wie in den Figuren 3 und 4 dargestellt, so wird - entsprechend dem gewünschten Luftaustritt - die Luft auf den äußeren Teil-Strömungskanal 5 und den inneren Teil-Strömungskanal 6 verteilt, wodurch der durch den inneren Teil-Strömungskanal 6 kommende Luftstrahl durch den mit einem Drall beaufschlagten, durch den äußeren Teil-Strömungskanal 5 strömenden Luftstrahl aufgefächert wird, so dass ein aufgefächerter Teil-Luftstrahl durch das Gitter 2 und ein diffuser Teil-Luftstrahl durch den Spalt 3 austritt..

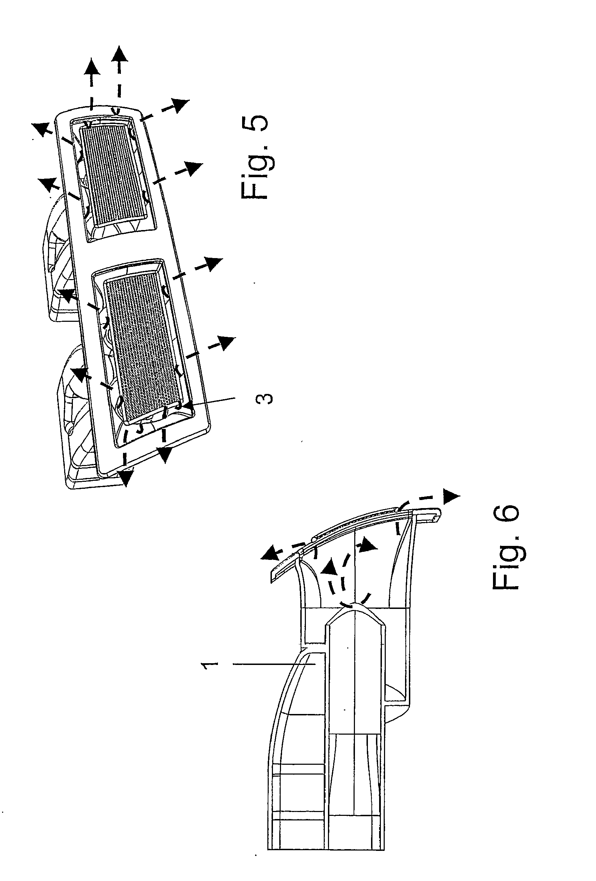

Soll ausschließlich ein diffuser Luftaustritt erfolgen, so gelangt ausschließlich Luft durch den äußeren Teil-Strömungskanal 5, die mit einem Drall versehen zum Düsenaustritt gelangt und insbesondere durch den Spalt 3 austritt, wobei sie sich möglichst ausbreitet, wie durch Pfeile in den Figuren 5 und 6 angedeutet.

### Bezugszeichenliste

1 Düse
2 Gitter
3 Spalt
4 Düsenanordnung
5 äußerer Teil-Strömungskanal
6 innerer Teil-Strömungskanal

## Patentansprüche

1. Düsenanordnung, insbesondere für ein Belüftungssystem eines Kraftfahrzeugs, mit mindestens einer an einem Ende eines Strömungskanals angeordneten Düse (1) und einem am Düsenaustritt angeordneten Gitter (2), das den Düsenaustritt teilweise verdeckt, wobei um das Gitter (2) ein umlaufender Spalt (4) vorgesehen ist **dadurch gekennzeichnet, dass** der Strömungskanal im Einlassbereich der Düse (1) in einen äußeren Teil-Strömungskanal (5) und einen inneren Teil-Strömungskanal (6) aufgeteilt ist und dem äußeren Teil-Strömungskanal (5) ein Drall durch entsprechende Umlenkung im Strömungsverlauf gegeben ist und der innere Teil-Strömungskanal (6), so ausgebildet ist, dass durch diesen Teil-Strömungskanal (6) dem Fahrzeuginnenraum Luft mit einer relativ gleichmäßigen, verwirbelungsfreien Strömung zuführbar ist.

2. Düsenanordnung nach Anspruch 1, **dadurch gekennzeichnet, dass** das Gitter (2) den Düsenaustritt in einem zentralen Bereich verdeckt.

3. Düsenanordnung nach einem der vorhergehenden Ansprüche, **dadurch gekennzeichnet, dass** das Gitter (2) rechteckförmig ausgebildet ist.

4. Düsenanordnung nach einem der vorhergehenden Ansprüche, **dadurch gekennzeichnet, dass** das Gitter (2) im Wesentlichen undurchsichtig ausgebildet ist.

5. Düsenanordnung nach einem der vorhergehenden Ansprüche, **dadurch gekennzeichnet, dass** das Gitter (2) netzartig ausgebildet ist.

6. Düsenanordnung nach einem der vorhergehenden Ansprüche, **dadurch gekennzeichnet, dass** zwei Düsen (1) nebeneinander angeordnet sind, die gemeinsam durch das Gitter (2) verdeckt werden.

7. Düsenanordnung nach einem der vorhergehenden Ansprüche, **dadurch gekennzeichnet, dass** das Gitter (2) an den Enden links und/oder rechts halbrund ausgebildet ist.

8. Belüftungssystem, insbesondere für ein Kraftfahrzeug, **gekennzeichnet durch** mindestens eine Düsenanordnung (4) gemäß einem der Ansprüche 1 bis 7.

## Claims

1. Nozzle array, in particular for a ventilation system of a motor vehicle, with at least one nozzle (1) located at the end of a flow duct and a grille (2) located at the nozzle outlet, wherein a continuous gap (4) is provided around the grille (2), **characterised in that** the flow duct is divided into an outer flow duct part (5) and an inner flow duct part (6) in the inlet region of the nozzle (1), **in that** a swirl is induced into the outer flow duct part (5) by a suitable deflection in the course of flow and **in that** the inner flow duct part (6) is designed such that air with a relatively even, turbulence-free flow can be fed into the vehicle interior through said flow duct part (6).

2. Nozzle array according to claim 1, **characterised in that** the grille (2) covers the nozzle outlet in a central region.

3. Nozzle array according to any of the preceding claims, **characterised in that** the grille (2) is rectangular in configuration.

4. Nozzle array according to any of the preceding claims, **characterised in that** the grille is substantially non-transparent in configuration.

5. Nozzle array according to any of the preceding claims, **characterised in that** the grille (2) is mesh-like in configuration.

6. Nozzle array according to any of the preceding claims, **characterised in that** two nozzles (1) jointly covered by the grille (2) are arranged side by side.

7. Nozzle array according to any of the preceding claims, **characterised in that** the grille (2) is semicircular in configuration at the left- and/or right-hand end(s).

8. Ventilation system, in particular for a motor vehicle, **characterised by** a nozzle array (4) according to any of claims 1 to 7.

## Revendications

1. Agencement de buses, en particulier pour un système de ventilation d'un véhicule automobile, comprenant au moins une buse (1) disposée à une extrémité d'un conduit d'écoulement et une grille (2) disposée au niveau de la sortie de la buse, grille qui recouvre partiellement la sortie de la buse, où il est prévu, autour de la grille (2), une fente circulaire (4),
**caractérisé en ce que** le conduit d'écoulement est divisé, dans la zone d'entrée de la buse (1), en un conduit d'écoulement partiel extérieur (5) et en un conduit d'écoulement partiel intérieur (6), et un tourbillonnement est fourni au conduit d'écoulement partiel extérieur (5) sous l'effet d'une déviation correspondante sur le trajet de l'écoulement, et le conduit d'écoulement partiel intérieur (6) est configuré de manière telle que, à travers ce conduit d'écoulement partiel (6), de l'air ayant un écoulement relativement uniforme et exempt de turbulences puisse être fourni à l'habitacle du véhicule.

2. Agencement de buses selon la revendication 1, **caractérisé en ce que** la grille (2) recouvre la sortie des buses, dans une zone centrale.

3. Agencement de buses selon l'une ou l'autre des revendications précédentes, **caractérisé en ce que** la grille (2) est configurée en étant de forme rectangulaire.

4. Agencement de buses selon l'une quelconque des revendications précédentes, **caractérisé en ce que** la grille (2) est configurée sensiblement de façon opaque.

5. Agencement de buses selon l'une quelconque des revendications précédentes, **caractérisé en ce que** la grille (2) est configurée en forme de treillis.

6. Agencement de buses selon l'une quelconque des revendications précédentes, **caractérisé en ce que** deux buses (2) sont disposées l'une à côté de l'autre, buses qui sont recouvertes, en commun, par la grille (2).

7. Agencement de buses selon l'une quelconque des revendications précédentes, **caractérisé en ce que** la grille (2) est configurée, au niveau des extrémités gauche et / ou droite, en ayant une forme demi-ronde.

8. Système de ventilation, en particulier pour un véhicule automobile, **caractérisé par** au moins un agencement de buses (4) selon l'une quelconque des revendications 1 à 7.
